# EUROPÄISCHE PATENTANMELDUNG

(11) **EP 4 847 729 A1**
(43) Veröffentlichungstag der Anmeldung: **02.12.2026**
(21) Anmeldenummer: 25179153.9
(22) Anmeldetag: 27.05.2025
(51) Int. Cl.: E05B 83/10, B62D 33/04

(54) **KOFFERAUFBAU FÜR EIN FAHRZEUG SOWIE EIN FAHRZEUG ZUR AUSLIEFERUNG VON LEBENSMITTELN MIT EINEM SOLCHEN KOFFERAUFBAU**

(71) Anmelder: Dörsam Fahrzeug- und Klimatechnik GmbH, 69509 Mörlenbach (DE)
(72) Erfinder: Dörsam, Horst, 69509 Mörlenbach (DE)
(74) Vertreter: Reiser & Partner Patentanwälte mbB

(57) **Zusammenfassung**

Kofferaufbau (1) für ein Fahrzeug, umfassend einen durch einen Boden (2), eine Decke (3) und vier Wände (4) gebildeten Kasten (5), wobei in den Kasten (5) eine Tür (6) eingebracht ist, wobei die Tür (6) einen ersten und einen zweiten Türflügel (7, 8) aufweist, die jeweils eine geschlossene und eine geöffnete Position aufweisen, wobei der erste Türflügel (7) einen Fixiermechanismus (18) umfasst, der den ersten Türflügel (7) in der geschlossenen Position hält, wobei der erste Türflügel (7) durch Aufbringen einer Kraft öffenbar ist, wobei der zweite Türflügel (8) einen ersten und einen zweiten Verriegelungsmechanismus (19, 20) aufweist, um den zweiten Türflügel (8) in der geschlossenen Position zu halten, wobei der erste und der zweite Verriegelungsmechanismus (19, 20) jeweils eine entriegelte und eine verriegelte Stellung aufweisen, wobei in der entriegelten Stellung der zweite Türflügel (8) zwischen geöffneter und geschlossener Position überführt werden kann, wobei in der verriegelten Stellung der zweite Türflügel (8) in der geschlossenen Stellung verriegelt ist, wobei der zweite Türflügel (8) zudem ein Betätigungselement (21) umfasst, wobei durch Betätigung des Betätigungselements (21) der erste und der zweite Verriegelungsmechanismus (19, 20) zwischen entriegelter und verriegelter Stellung überführt werden können.

## Beschreibung

Die Erfindung betrifft einen Kofferaufbau für ein Fahrzeug, umfassend einen durch einen Boden, eine Decke und vier Wände gebildeten Kasten, wobei in den Kasten eine Tür eingebracht ist, wobei die Tür einen ersten und einen zweiten Türflügel aufweist, die jeweils eine geschlossene und eine geöffnete Position aufweisen, wobei der erste Türflügel einen Fixiermechanismus umfasst, der den ersten Türflügel in der geschlossenen Position hält, wobei der erste Türflügel durch Aufbringen einer Kraft öffenbar ist, wobei der zweite Türflügel einen ersten und zweiten Verriegelungsmechanismus aufweist, um den zweiten Türflügel in der geschlossenen Position zu halten.

Solche Kofferaufbauten werden insbesondere für Lieferfahrzeuge verwendet, mit denen Waren transportiert werden. Ein wichtiger Faktor ist dabei, das Gewicht des Kofferaufbaus zu minimieren, um möglichst viel Nutzlast für die zu transportierenden Waren zur Verfügung stellen zu können. Im Inneren des Kofferaufbaus werden mehrere, im Wesentlichen gleiche Behälter verwendet, um die zu transportierenden Waren systematisch zu lagern und Be- und Entladevorgänge zu vereinfachen und zu beschleunigen. Die Behälter sind üblicherweise in etwa quaderförmig ausgebildet und etwa 600 mm lang, 400 mm breit und 200 bis 500 mm hoch. Derartige Lieferfahrzeuge werden häufig in innerstädtischen Bereichen eingesetzt, um Lebensmittel oder dergleichen an dort ansässige Gewerbebetriebe oder auch an Endkunden auszuliefern.

Bei der Auslieferung von Waren an Gewerbebetriebe sowie an Endverbraucher werden oftmals Produkte ausgeliefert, die eine Kühlung benötigen. Daher werden die Kofferaufbauten insbesondere für Kühlfahrzeuge verwendet, um auch verderbliche Ware transportieren zu können. Boden, Decke und Wände des Kastens sind daher als Sandwichkonstruktion aufgebaut und umfassen zwei Decklagen und eine zwischen den Decklagen angeordnete Dämmlage. Die Decklagen sind üblicherweise aus glasfaserverstärktem Kunststoff oder Metall ausgebildet, um die Dämmlage vor äußerlichen Einwirkungen und Beschädigungen zu schützen. Die Dämmlage ist üblicherweise aus Schaumstoff oder einem ähnlichen Dämmmaterial ausgebildet, um sowohl eine Wärmeisolation als auch eine ausreichende Festigkeit des Sandwichverbundes zu gewährleisten.

Zudem sollen die Entladevorgänge schnell durchgeführt werden, damit die Zeitspanne kurz ist, in der die Tür des Kofferaufbaus geöffnet ist und wärmere Umgebungsluft in den Kofferaufbau strömt. Dadurch ergeben sich besondere Herausforderungen an die Tür, die eine einfache und damit schnelle Bedienung ermöglichen soll.

Der Erfindung liegt die Aufgabe zugrunde, einen Kofferaufbau für ein Fahrzeug bereitzustellen, der eine verbesserte Handhabbarkeit aufweist.

Die Aufgabe wird mit den Merkmalen von Anspruch 1 gelöst. Auf vorteilhafte Ausgestaltungen nehmen die Unteransprüche Bezug.

Der erfindungsgemäße Kofferaufbau für ein Fahrzeug umfasst einen durch einen Boden, eine Decke und vier Wände gebildeten Kasten, wobei in den Kasten eine Tür eingebracht ist, wobei die Tür einen ersten und einen zweiten Türflügel aufweist, die jeweils eine geschlossene und eine geöffnete Position aufweisen, wobei der erste Türflügel einen Fixiermechanismus umfasst, der den ersten Türflügel in der geschlossenen Position hält, wobei der erste Türflügel durch Aufbringen einer Kraft öffenbar ist, wobei der zweite Türflügel einen ersten und einen zweiten Verriegelungsmechanismus aufweist, um den zweiten Türflügel in der geschlossenen Position zu halten, wobei der erste und der zweite Verriegelungsmechanismus jeweils eine entriegelte und eine verriegelte Stellung aufweisen, wobei in der entriegelten Stellung der zweite Türflügel zwischen geöffneter und geschlossener Position überführt werden kann, wobei in der verriegelten Stellung der zweite Türflügel in der geschlossenen Stellung verriegelt ist, wobei der zweite Türflügel zudem ein Betätigungselement umfasst, wobei durch Betätigung des Betätigungselements der erste und der zweite Verriegelungsmechanismus zwischen entriegelter und verriegelter Stellung überführt werden können.

Der Kasten ist quaderförmig ausgebildet und umfasst eine Stirnwand, zwei an der Stirnwand angeordnete Seitenwände und eine der Stirnwand gegenüberliegende Rückwand. Der Kasten begrenzt einen Innenraum zur Aufnahme von Behältern. Die Länge des Kastens liegt vorzugweise in einem Bereich zwischen 3.000 mm und 4.000 mm. Die Breite des Kastens liegt vorzugweise in einem Bereich zwischen 1500 mm und 2.500 mm. Die Höhe des Kastens liegt vorzugweise in einem Bereich zwischen 1.500 mm und 2.500 mm. Besonders bevorzugt beträgt die Länge des Kastens etwa 3.400 mm, die Breite des Kastens etwa 2.000 mm und die Höhe des Kastens etwa 1.900 mm. Die zuvor genannten Maße beziehen sich auf die Innenmaße des Kastens. Der Kasten ist mit dem Chassis des Fahrzeugs verbunden. Der Innenraum weist bevorzugt ein Volumen in einem Bereich von 7 m³ bis 25 m³ auf. Bevorzugt weist der Innenraum ein Volumen von etwa 13,5 m³ auf.

Ist der erste Türflügel in einer geschlossenen Position, dann ist zur Öffnung des ersten Türflügels der Fixiermechanismus zu überwinden. Der erste Türflügel ist manuell bedienbar, denn die Kraft zur Überwindung des Fixiermechanismus, um den ersten Türflügel von der geschlossenen Position in eine geöffnete Position zu bringen, entspricht einer Handkraft durch einen Benutzer. Der erste Türflügel kann ohne die Betätigung weiterer Elemente geöffnet werden. Zum Öffnen ist demnach ausreichend von außen an dem ersten Türflügel zu ziehen bzw. von innen gegen den ersten Türflügel zu drücken. Zum Schließen ist ausreichend von außen gegen den ersten Türflügel zu drücken bzw. von innen an dem ersten Türflügel zu ziehen, bis sich der erste Türflügel in einer geschlossenen Position befindet. Ist der zweite Türflügel in einer geschlossenen Position und der erste und zweite Verriegelungsmechanismus in verriegelter Stellung, dann sind zur Öffnung des zweiten Türflügels zunächst durch Betätigung des Betätigungselements der erste und der zweite Verriegelungsmechanismus von der verriegelten Stellung in eine entriegelte Stellung zu überführen. Anschließend kann der zweite Türflügel von der geschlossenen Position in eine geöffnete Position überführt werden, um den zweiten Türflügel zu öffnen. Der zweite Türflügel kann vorzugsweise auch in verriegelter Stellung des ersten und des zweiten Verriegelungsmechanismus von einer geöffneten Position in die geschlossene Position gebracht werden. Durch die genannten Maßnahmen wird der Zeitaufwand zur Benutzung der Tür verringert und die Bedienbarkeit weiter verbessert.

Die Tür kann einen Türrahmen umfassen, der mit dem ersten und dem zweiten Türflügel jeweils durch zumindest ein Scharnier verbunden ist. Der erste und der zweite Türflügel können relativ zum Türrahmen um das jeweilige Scharnier drehbar gelagert sein. Bevorzugt beträgt der Öffnungswinkel, um den der erste und der zweite Türflügel um das jeweilige Scharnier maximal gedreht werden können, etwa 180°. Vorzugsweise sind der erste und der zweite Türflügel jeweils durch zwei Scharniere mit dem Türrahmen verbunden. Bevorzugt sind die Scharniere aus Edelstahl oder Aluminium ausgebildet.

Die Tür kann in eine der Wände eingebracht sein und einen Ausschnitt der Wand bedecken. Bevorzugt weist der Ausschnitt der Wand eine lichte Weite in einem Bereich von 600 mm bis 1.000 mm auf. Besonders bevorzugt weist der Ausschnitt der Wand eine lichte Weite von mindestens 800 mm auf. Die Tür kann vorzugsweise in die Rückwand eingebracht sein. Bevorzugt erstreckt sich die Tür in der Rückwand vom Boden bis zur Decke. Der erste und/oder der zweite Türflügel können von der geschlossenen Position in die geöffnete Position durch Öffnen des ersten und/oder des zweiten Türflügels überführt werden. Der erste und/oder der zweite Türflügel können von der geöffneten Position in die geschlossene Position durch Schließen des ersten und/oder des zweiten Türflügels überführt werden. In der geschlossenen Position des ersten oder zweiten Türflügels sind der erste oder zweite Türflügel im Wesentlichen parallel zu der Rückwand ausgerichtet und verdecken den Ausschnitt der Wand vollständig. Sind der erste und der zweite Türflügel in der geöffneten Position, kann ein Benutzer von außen nach innen oder umgekehrt durch den Ausschnitt der Wand in den Kofferaufbau hinein- oder aus dem Kofferaufbau heraustreten. In der geöffneten Position des ersten oder zweiten Türflügels, wird der Ausschnitt der Wand nicht vollständig verdeckt. Insofern weisen der erste und der zweite Türflügel mehrere geöffnete Positionen auf.

Das Betätigungselement kann mechanisch oder elektrisch ausgestaltet sein. Insbesondere kann das Betätigungselement einen Griff umfassen. Der Griff kann derart ausgestaltet sein, dass zur Betätigung des Betätigungselements der Griff von einer Ausgangslage in eine Endlage bewegbar ist. Die Bewegung kann dabei rotatorisch und/oder linear erfolgen. Vorzugsweise ist der Griff so ausgestaltet, dass nach Betätigung des Betätigungselements der Griff von der Endlage in die Ausgangslage automatisch zurückgeführt wird. Dazu kann das Betätigungselement Federelemente umfassen. Der Griff kann als Klinke ausgebildet sein. Bevorzugt umfasst das Betätigungselement zwei Griffe, wobei einer der Griffe als Innengriff ausgebildet ist und in einer geschlossenen Stellung des zweiten Türflügels an einer dem Innenraum des Kastens zugewandten Hauptseite des zweiten Türflügels angeordnet ist, und wobei der andere der Griffe als Außengriff ausgebildet ist und in einer geschlossenen Stellung des zweiten Türflügels an einer dem Innenraum des Kastens abgewandten Hauptseite des zweiten Türflügels angeordnet ist. In einer vorteilhaften Weiterbildung der Erfindung kann vorgesehen sein, dass das Betätigungselement eine Notöffnungseinrichtung umfasst. Die Notöffnungseinrichtung kann derart ausgebildet sein, dass bei Funktionsversagen des Griffs das Betätigungselement mittels der Notöffnungseinrichtung betätigt werden kann, um den ersten und den zweiten Verriegelungsmechanismus zwischen entriegelter und verriegelter Stellung zu überführen.

Der Fixiermechanismus kann an einer der Decke des Kastens zugewandten Seite des ersten Türflügels und/oder an einer dem Boden des Kastens zugewandten Seite des ersten Türflügels angeordnet sein, wobei der Fixiermechanismus als Übertotpunktmechanismus ausgebildet ist. Der Fixiermechanismus ist vorzugsweise an einer der Decke des Kastens zugewandten Seite des ersten Türflügels angeordnet. Der Fixiermechanismus kann eine Feder umfassen. Die Feder ist so ausgebildet, dass eine von der Feder verursachte Federkraft der Überführung des ersten Türflügels von der geschlossenen Position in eine der geöffneten Positionen entgegenwirkt. Die Federkraft entspricht im Wesentlichen der Kraft, die zur Überwindung des Fixiermechanismus aufzubringen ist. Der Fixiermechanismus ist vorzugsweise als federbelasteter Übertotpunkt-Schnapper ausgebildet. Dadurch wird die Bedienbarkeit weiter verbessert.

Der erste Verriegelungsmechanismus kann ein Verriegelungselement und eine mit dem Verriegelungselement zusammenwirkende Ausnehmung umfassen. Vorzugsweise ragt das Verriegelungselement in der verriegelten Stellung über den zweiten Türflügel hinaus. Das Verriegelungselement ragt in geschlossener Stellung des zweiten Türflügels und in verriegelter Stellung des ersten Verriegelungsmechanismus in die Ausnehmung, wodurch eine formschlüssige Verbindung entsteht. Die Eindringtiefe des Verriegelungselements in die Ausnehmung beträgt vorzugsweise weniger als 15 mm, bevorzugt weniger als 10 mm, insbesondere weniger als 5 mm.

Die Ausnehmung kann eine Anlauffläche aufweisen. Die Anlauffläche kann dabei als abgeschrägte Kante der Ausnehmung ausgebildet sein, wobei die Anlauffläche an einer dem Innenraum des Kastens abgewandten Seite der Ausnehmung angeordnet ist. Die Anlauffläche ist vorzugsweise in einem Winkel zum Boden des Kastens angeordnet. Vorzugsweise liegt der Winkel in einem Bereich zwischen 65° und 85°, bevorzugt in einem Bereich zwischen 70° und 80°, insbesondere etwa 75°. Dabei kann die Anlauffläche so angeordnet sein, dass die Anlauffläche in Richtung der Stirnwand schräg nach unten verläuft. Das Verriegelungselement kann beim Überführen des zweiten Türflügels von der geschlossenen Position in eine geöffnete Position mit der Anlauffläche kontaktieren. Dadurch wird die Widerstandskraft des Verriegelungselement beim Öffnen des zweiten Türflügels reduziert, so dass die Handhabbarkeit des Kofferaufbaus weiter verbessert wird.

Die Ausnehmung kann zudem ein Verschleißschutzelement aufweisen, wobei das Verschleißschutzelement an dem Boden des Kastens fixiert ist. Vorzugsweise grenzt das Verschleißschutzelement an einer dem Innenraum des Kastens abgewandten Seite an die Anlauffläche. In einer vorteilhaften Ausführungsform sind Anlauffläche und das Verschleißschutzelement einteilig und materialeinheitlich ausgestaltet. Durch das Verschleißschutzelement wird erreicht, dass beim Öffnen des zweiten Türflügels entstehender Verschleiß durch Reibung des Verriegelungselements an dem Verschleißschutzelement auftritt. Es wird verhindert, dass dieser Verschleiß an dem Boden des Kastens auftritt. Insbesondere bei häufigem Öffnen des zweiten Türflügels ist dies relevant. Vorzugsweise ist das Verschleißschutzelement als separates Bauteil unabhängig vom Boden des Kastens ausgebildet, so dass am Ende der Lebenszeit des Verschleißschutzelements dieses Bauteil ausgetauscht werden kann und eine aufwändige Reparatur des Bodens vermieden wird. Dadurch wir die Handhabbarkeit des Kofferaufbaus weiter verbessert.

Das Verriegelungselement kann als Riegel ausgebildet sein, wobei der Riegel eine abgeschrägte Kante aufweist. Der Riegel ist dabei derart ausgestaltet, dass beim Überführen des zweiten Türflügels von einer geöffneten Position in die geschlossene Position die abgeschrägte Kante gegen den Kasten gedrückt wird und der erste Verriegelungsmechanismus von der verriegelten Stellung in die entriegelte Stellung überführt wird. Vorzugsweise wirkt auf das Verriegelungselement eine Kraft, die so ausgerichtet ist, um das Verriegelungselement von der entriegelten Stellung in die verriegelte Stellung zu überführen. Vorzugsweise wird die Kraft durch ein Federelement hervorgerufen. Beim Schließen des zweiten Türflügels wird das Verriegelungselement somit automatisch beim Erreichen der geschlossenen Position von der entriegelten Stellung in die verriegelte Stellung überführt.

Das Verriegelungselement kann an einer dem Boden des Kastens zugewandten Seite des zweiten Türflügels angeordnet sein, wobei die Ausnehmung in dem Boden des Kastens angeordnet ist. In geschlossener Stellung des zweiten Türflügels und in verriegelter Stellung des ersten Verriegelungsmechanismus ragt das Verriegelungselement in die Ausnehmung, wodurch eine formschlüssige Verbindung zwischen dem zweiten Türflügel und dem Boden des Kastens ausgebildet ist. In geschlossener Stellung des zweiten Türflügels und verriegelter Stellung des ersten Verriegelungsmechanismus kann der zweite Türflügel nicht in eine geöffnete Position überführt werden.

Der zweite Verriegelungsmechanismus kann einen Verriegelungsbolzen und einen mit dem Verriegelungsbolzen zusammenwirkenden Schließbolzen umfassen. Vorzugsweise ist der Schließbolzen als drehbare Klaue ausgebildet. Der Schließbolzen weist eine geschlossene Stellung auf, wobei der Schließbolzen in der geschlossenen Stellung festlegbar ist, wodurch der Verriegelungsbolzen festgehalten wird, um den zweiten Türflügel geschlossen zu halten.

Der Schließbolzen kann an einer der Decke des Kastens zugewandten Seite des zweiten Türflügels angeordnet sein, wobei der Verriegelungsbolzen an der Decke des Kastens oder einem der Decke des Kastens zugewandten Bereich einer der Wände angeordnet ist. Vorzugsweise ist der Verriegelungsbolzen an der Rückwand des Kastens angeordnet.

Der zweite Verriegelungsmechanismus kann eine Sicherheitsstellung aufweisen. In der Sicherheitsstellung des zweiten Verriegelungsmechanismus ist der zweite Türflügel nicht in einer vollständig geschlossenen Position, sondern der zweite Türflügel ist vielmehr leicht geöffnet. Der Öffnungswinkel des zweiten Türflügels in Bezug zur Rückwand des Kastens beträgt in der Sicherheitsstellung vorzugsweise weniger als 20°, besonders bevorzugt weniger als 10°, insbesondere bevorzugt weniger als 5°. Der zweite Türflügel wird in der Sicherheitsstellung von dem zweiten Verriegelungsmechanismus in dieser leicht geöffneten Position gehalten und kann nicht in eine beliebige geöffnete Position mit einem größeren Öffnungswinkel des zweiten Türflügels wechseln. Obwohl der zweite Türflügel sich in der Sicherheitsstellung in einer leicht geöffneten Position befindet, wird der zweite Türflügel nicht vollständig geöffnet. Die Sicherheitsstellung ist als Sicherheitsmaßnahme vorgesehen: Ist der zweite Türflügel in der vollständig geschlossenen Position und der erste und zweite Verriegelungsmechanismus versagen, dann kann sich der zweite Türflügel durch äußere Krafteinwirkungen, zum Beispiel während der Fahrt eines Fahrzeuges mit dem Kofferaufbau, höchstens bis zur Sicherheitsstellung öffnen. Der Benutzer wird durch die leicht geöffnete Position des zweiten Türflügels auf das Versagen des ersten und zweiten Verriegelungsmechanismus aufmerksam gemacht und wird entsprechende Maßnahmen ergreifen. Insbesondere wird der zweite Türflügel während der Fahrt nicht in eine vollständig geöffnete Position gebracht, welche die Ladung des Kastens gefährden könnte.

Das Betätigungselement kann einen Sperrzustand und einen Freigabezustand aufweisen, wobei in dem Freigabezustand durch Betätigung des Betätigungselements die Stellung des ersten und des zweiten Verriegelungsmechanismus änderbar ist, wobei in dem Sperrzustand durch Betätigung des Betätigungselements die Stellung des ersten und des zweiten Verriegelungsmechanismus unveränderbar ist. Der Sperrzustand dient dem Diebstahlschutz, damit unbefugte Dritte trotz Betätigung des Betätigungselements den ersten und den zweiten Verriegelungsmechanismus nicht in eine entriegelte Stellung bringen können, um den zweiten Türflügel zu öffnen. Umfasst das Betätigungselement einen Innengriff, dann ist der Innengriff bevorzugt so ausgestaltet, dass bei Betätigung des Innengriffs trotz Sperrzustand des Betätigungselements die Stellung des ersten und zweiten Verriegelungsmechanismus von einer verriegelten Stellung in eine entriegelte Stellung überführt werden kann. Dies dient der Notfallöffnung aus dem Innenraum des Kastens, so dass auch im Sperrzustand des Betätigungselements eine Öffnung von innen gewährleistet werden kann. Vorzugsweise ist zur Überwindung des Sperrzustands der Innengriff mehrfach zu betätigen, besonders bevorzugt zweimal.

Das Betätigungselement kann durch mechanische und/oder elektronische Mittel zwischen Sperrzustand und Freigabezustand überführt werden. Das mechanische Mittel kann als Schließzylinder mit Schlüssel ausgebildet sein. Das elektronische Mittel kann als Stellmotor ausgebildet sein, der insbesondere von einer Fahrzeugzentralverriegelung ansteuerbar ist. Vorzugsweise kann das Betätigungselement durch mechanische und elektronische Mittel zwischen Sperrzustand und Freigabezustand überführt werden. Das mechanische Mittel dient dann als Rückfallsystem, falls das elektronische Mittel ausfallen sollte.

In geschlossener Stellung von erstem und zweitem Türflügel kann der erste Türflügel zwischen dem zweiten Türflügel und einem Innenraum des Kastens angeordnet sein. Der zweite Türflügel überlappt dabei den ersten Türflügel, so dass eine Kante des zweiten Türflügels über eine Kante des ersten Türflügels übersteht. Dadurch wird der erste Türflügel in der geschlossenen Position zusätzlich von dem zweiten Türflügel in der geschlossenen Position fixiert. Der erste Türflügel kann nur geöffnet werden, wenn sich der zweite Türflügel in einer geöffneten Position befindet. Dadurch wird der erste Türflügel zusätzlich gesichert. Zudem ist die Reihenfolge zum Öffnen und Schließen der Tür festgelegt. Zum Öffnen muss zuerst der zweite Türflügel geöffnet werden, bevor der erste Türflügel geöffnet werden kann. Zum Schließen muss zuerst der erste Türflügel geschlossen werden, bevor der zweite Türflügel geschlossen werden kann.

Der Kasten kann eine Vorrichtung zum Ein- und Ausstieg aus dem Kasten umfassen. Vorzugsweise umfasst die Vorrichtung zumindest eine Treppenstufe. Besonders bevorzugt umfasst die Vorrichtung genau zwei Treppenstufen. Die Treppenstufe ist derart ausgebildet, dass ein Benutzer sie betreten kann, um in den Kasten hineinzusteigen oder aus dem Kasten herauszusteigen. Vorzugsweise liegt die Tragkraft der Treppenstufe bei mindestens 100 kg, besonders bevorzugt bei mindestens 150 kg, insbesondere bevorzugt bei mindestens 200 kg. Zudem ist die Treppenstufe derart ausgebildet, dass ein Treppensteiger Lasten über die Treppenstufen hinauf oder hinunter transportieren kann. Dazu liegt der Abstand zwischen zwei benachbarten Treppenstufen in einem Bereich zwischen 100 mm und 300 mm, vorzugweise bei maximal 200 mm. Wenigstens eine der Treppenstufen kann eine Gebrauchsstellung und eine Transportstellung aufweisen. In der Gebrauchsstellung ist die Treppenstufe so positioniert, dass ein Benutzer sie betreten kann, um in den Kasten hineinzusteigen oder aus dem Kasten herauszusteigen. In der Transportstellung ist die Treppenstufe platzsparend unterhalb des Kastens positioniert. Die Vorrichtung ist vorzugsweise so eingerichtet, dass die Treppenstufen zwischen Gebrauchsstellung und Transportstellung überführt werden können. Besonders bevorzugt können die Treppenstufen von einem Benutzer freihändig zwischen Gebrauchsstellung und Transportstellung überführt werden. Zur Überführung der Treppenstufen zwischen Gebrauchsstellung und Transportstellung können die Treppenstufen ein- und ausziehbar und/oder ein- und ausschwenkbar ausgestaltet sein. Vorzugsweise sind die Treppenstufen ein- und ausziehbar und ein- und ausschwenkbar, wobei eine Linearbewegung und eine Drehbewegung überlagert sind. Vorzugsweise ist die Linearbewegung die Hauptbewegung, um die Treppenstufen ein- bzw. auszuziehen. Bevorzugt sind die Treppenstufen außerhalb des Öffnungsbereich der Tür angeordnet. Dadurch ist sichergestellt, dass die Tür unabhängig von der Stellung der Treppenstufen öffenbar und schließbar ist. Der erste und der zweite Türflügel können ohne vorheriges Überführen der Treppenstufen in die Gebrauchs- oder Transportstellung geöffnet werden. In einer vorteilhaften Ausgestaltung der Erfindung ist vorgesehen, dass die Vorrichtung ein Warnsystem umfasst. Das Warnsystem ist dabei derart ausgestaltet, dass ein Benutzer durch einen akustischen und/oder visuellen Warnhinweis darüber informiert wird, dass wenigstens eine der Treppenstufen in einer Gebrauchsstellung positioniert ist. Vorzugsweise erfasst das Warnsystem zumindest eine weitere Eingangsgrößer, insbesondere den Zustand der Tür des Kastens und/oder die Geschwindigkeit des Fahrzeugs. Das Warnsystem kann so ausgestaltet sein, dass der Warnhinweis nur ausgegeben wird, wenn eine weitere Bedingung vorliegt, insbesondere wenn zusätzlich zu einer Treppenstufe in Transportstellung die Tür des Kastens geschlossen ist oder das Fahrzeug losfährt. Vorzugsweise ist das Warnsystem so ausgestaltet, dass es bereits aktiv ist, sobald die Zündung des Fahrzeugs eingeschaltet ist.

Der Kasten kann eine Fixiereinrichtung für einen Treppensteiger umfassen. Ein Treppensteiger ist ein Transportmittel, das mittels eines Rädersystems in der Lage ist, Lasten über Treppenstufen hinauf oder hinunter zu transportieren. Die Fixiereinrichtung ist bevorzugt als Transportsicherung ausgebildet, so dass der Treppensteiger während der Fahrt eines Fahrzeuges mit dem Kofferaufbau gesichert ist.

Die Fixiereinrichtung kann zumindest eine Federklammer umfassen, wobei ein erstes Sicherungselement des Treppensteigers zumindest teilweise von der Federklammer umschließbar ist. Die Federklammer ist vorzugsweise an einer der Wände des Kastens angeordnet. Besonders bevorzugt ist die Federklammer an einer der Seitenwände angeordnet. Die Federklammer kann in einem dem Boden zugewandten Bereich der Wand angeordnet sein. Die Federklammer ist vorzugsweise so ausgestaltet, dass das Sicherungselement des Treppensteigers durch Handkraft in die Federklammer eingesetzt werden kann, so dass die Federklammer das erste Sicherungselement des Treppensteigers zumindest teilweise umgibt. Dadurch entsteht eine form- und/oder kraftschlüssige Verbindung zwischen Fixiereinrichtung und Treppensteiger. Das erste Sicherungselement des Treppensteigers kann einem ersten Ende des Treppensteigers zugeordnet sein. Vorzugsweise ist die Federklammer in einem Einfahrgehäuse angeordnet, wobei das Einfahrgehäuse den mit der Federklammer verbundenen Treppensteiger teilweise umgibt. Vorzugsweise umfasst die Fixiereinrichtung zwei Federklammern.

Die Fixiereinrichtung kann einen Sicherungsbolzen mit einem Bolzenkörper und einer Scheibe umfassen, wobei der Bolzenkörper von einem zweiten Sicherungselement des Treppensteigers zumindest teilweise umschließbar ist. Der Sicherungsbolzen ist vorzugsweise an einer der Wände des Kastens angeordnet. Besonders bevorzugt ist der Sicherungsbolzen an der Rückwand angeordnet. Der Sicherungsbolzen kann im Wesentlichen senkrecht von der Wand des Kastens abragen. Der Bolzenkörper ist vorzugsweise zylindrisch ausgestaltet und weist eine Länge in einem Bereich von 15 mm bis 50 mm auf, besonders bevorzugt eine Länge von 30 mm. Die Scheibe weist vorzugsweise einen Durchmesser in einem Bereich von 20 mm bis 60 mm auf, besonders bevorzugt einen Durchmesser von 45 mm. Bevorzugt ist die Scheibe an der der Wand abgewandten Seite des Bolzenkörpers angeordnet. Vorzugsweise wird der Bolzenkörper von dem zweiten Sicherungselement des Treppensteigers umschlossen und Wand und Scheibe legen das zweite Sicherungselement des Treppensteigers in Längsrichtung des Bolzenkörpers fest, so dass Treppensteiger und Fixiereinrichtung form- und/oder kraftschlüssig verbunden sind. Das zweite Sicherungselement des Treppensteigers kann einem zweiten, dem ersten Ende gegenüberliegenden Ende des Treppensteigers zugeordnet sein.

Die Fixiereinrichtung kann einen an dem ersten oder dem zweiten Türflügel angeordneten Winkel umfassen, wobei der Winkel in geschlossener Position des ersten oder zweiten Türflügels den Treppensteiger an einem dritten Sicherungselement fixiert. Vorzugsweise ist der Winkel an dem zweiten Türflügel angeordnet. Der Winkel kann einen Befestigungsschenkel und einen Fixierungsschenkel aufweisen. Dabei kann der Winkel mit dem Befestigungsschenkel an dem ersten oder zweiten Türflügel befestigt sein. In geschlossener Position des Türflügels kann der Winkel mit dem Fixierungsschenkel den Treppensteiger an einem dritten Sicherungselement fixieren. Eine der Wände, vorzugsweise eine Seitenwand, und der Fixierungsschenkel können in einer geschlossenen Position des Türflügels den Treppensteiger form- und/oder kraftschlüssig fixieren. Der Treppensteiger kann dabei zwischen einer Wand, vorzugsweise einer Seitenwand, des Kastens und dem Fixierungsschenkel form- und/oder kraftschlüssig angeordnet sein. Durch den Winkel kann sichergestellt werden, dass bei geschlossener Tür der Treppensteiger zumindest an dem dritten Sicherungselement fixiert wird. Diese automatische Sicherung ermöglicht eine Zeitersparnis bei der Transportsicherung und eine einfachere Handhabbarkeit.

Der Kofferaufbau kann wenigstens eine Sperrstange umfassen. Die Sperrstange kann dazu ausgerüstet sein, im Innenraum des Kastens angeordnete Behälter gegen Um- bzw. Herausfallen zu sichern. Die Sperrstange ist vorzugsweise längenverstellbar. Dadurch ist die Sperrstange dazu eingerichtet, zwischen Boden und Decke gespannt zu werden, indem die Länge der Sperrstange so eingestellt wird, dass die Länge der Sperrstange etwas größer ist als der Abstand zwischen Boden und Decke.

Weiterhin umfasst die Sperrstange zumindest eine federbelastete, teleskopierbare Fixierspitze, die an einem der Enden der Sperrstange angeordnet ist. Beim Einsetzen der Sperrstange zwischen Boden und Decke kann die Fixierspitze so bewegt werden, dass die Feder der Fixierspitze komprimiert und die Sperrstange zwischen Boden und Decke durch die Federkraft der Feder verspannt wird. Vorzugsweise umfasst die Sperrstange zwei Fixierspitzen, die an den gegenüberliegenden Enden der Sperrstange angeordnet sind.

Der Kofferaufbau kann in Decke und/oder Boden wenigstens eine Fixierausnehmung umfassen, die dazu eingerichtet ist, die Enden der Sperrstange aufzunehmen. Die Enden der Sperrstange können in der Fixierausnehmung formschlüssig festgelegt werden. Vorzugsweise umfasst der Kofferaufbau in Decke und/oder Boden mehrere Fixierausnehmungen. Die Fixierausnehmungen sind vorzugsweise als mit Ankerpunkten versehene Zurrleisten ausgebildet. Vorzugsweise umfassen die Zurrleisten 4 bis 10 Ankerpunkte. In einer bevorzugten Ausführungsform umfasst der Kofferaufbau in Decke und Boden jeweils wenigstens eine Fixierausnehmung. Dabei kann die Sperrstange zwischen einer im Boden angeordneten Fixierausnehmung und einer in der Decke angeordneten Fixierausnehmung festgelegt werden, so dass die Sperrstange kraftschlüssig zwischen Decke und Boden verspannt ist und formschlüssig in den Fixierausnehmungen festgelegt ist.

In einer weiteren Ausführungsform kann die Sperrstange an einem ihrer Enden einen Tragfuß umfassen. Vorzugsweise umfasst die Sperrstange an beiden ihrer Enden jeweils einen Tragfuß. Der Tragfuß kann aus gummielastischem Material ausgebildet sein. Vorzugsweise ist der Tragfuß flächig mit zwei gegenüberliegenden Hauptseiten ausgebildet, wobei die der Sperrstange abgewandte Hauptseite Noppen umfasst. Mittels der Noppen kann die Reibung des Tragfußes verbessert werden, so dass die Sperrstange zwischen Boden und Decke des Kastens ohne Fixierausnehmung fixiert werden kann. Dadurch kann die Sperrstange flexibler und unabhängig von Fixierpunkte eingesetzt werden. Der Tragfuß kann an einem Ende der Sperrstange rotatorisch bewegbar festgelegt sein, so dass der Winkel zwischen Tragfuß und Sperrstange veränderbar ist. Dadurch kann die Sperrstange zwischen Boden und Decke des Kastens in einem Winkel zum Boden und zur Decke angeordnet werden. Die Fixierung der Sperrstange mit Tragfuß erfolgt über die Anpassung der Länge der Sperrstange.

Die der Erfindung zugrunde liegende Aufgabe wird auch durch eine Kofferaufbauanordnung gelöst. Bevorzugt umfasst die Kofferaufbauanordnung einen beschriebenen Kofferaufbau und einen Treppensteiger. In einer weiteren Ausgestaltung der Erfindung umfasst die Kofferaufbauanordnung einen Treppensteiger und zumindest eine Sperrstange. In einer bevorzugten Ausgestaltung der Erfindung umfasst die Kofferaufbauanordnung einen Treppensteiger, vier Sperrstangen mit Fixierspitzen und zwei Sperrstangen mit Tragfüßen.

Die der Erfindung zugrunde liegende Aufgabe wird auch durch ein Fahrzeug zur Auslieferung von Lebensmitteln mit einem beschriebenen Kofferaufbau gelöst. Weiterhin wird die der Erfindung zugrunde liegende Aufgabe auch durch ein Fahrzeug zur Auslieferung von Lebensmitteln mit einer beschriebenen Kofferaufbauanordnung gelöst.

Eine Ausgestaltung des erfindungsgemäßen Kofferaufbaus für ein Fahrzeug wird nachfolgend anhand der Figuren näher erläutert. Diese zeigen, jeweils schematisch:
- Fig. 1: einen Kofferaufbau in einer perspektivischen Ansicht;
- Fig. 2: den Kofferaufbau aus Fig. 1 in einer weiteren perspektivischen Ansicht;
- Fig. 3: eine Schnittansicht einer geschlossenen Tür des Kofferaufbaus aus Fig. 1;
- Fig. 4: eine Detailansicht einer Fixiereinrichtung für einen Treppensteiger des Kofferaufbaus aus Fig. 1.

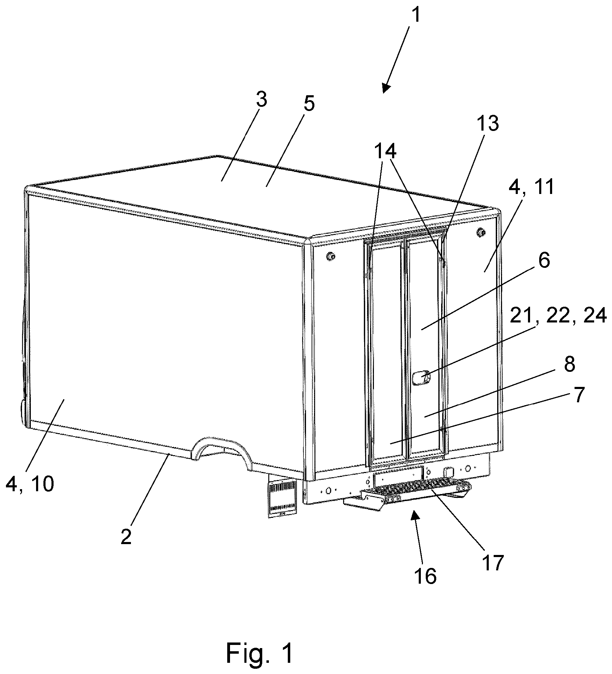

**Figur 1** zeigt einen erfindungsgemäßen Kofferaufbau 1, umfassend einen durch einen Boden 2, eine Decke 3 und vier Wände 4 (aufgrund der Perspektive hier nur zwei Wände sichtbar) gebildeten Kasten 5. In den Kasten 5 ist eine Tür 6 eingebracht, wobei die Tür 6 einen ersten und einen zweiten Türflügel 7, 8 aufweist, die jeweils eine geschlossene und eine geöffnete Position aufweisen. Der erste und der zweite Türflügel 7, 8 sind in **Figur 1** in einer geschlossenen Position dargestellt.

Der Kasten 5 ist quaderförmig ausgebildet und umfasst eine Stirnwand 9, zwei an der Stirnwand 9 angeordnete Seitenwände 10 und eine der Stirnwand 9 gegenüberliegende Rückwand 11. Der Kasten 5 begrenzt einen Innenraum 12 zur Aufnahme von Behältern. Die Länge des Kastens 5 beträgt 3.400 mm. Die Breite des Kastens 5 beträgt 2.000 mm. Die Höhe des Kastens 5 beträgt 1.900 mm. Die zuvor genannten Maße beziehen sich auf die Innenmaße des Kastens 5. Der Innenraum 12 weist ein Volumen von etwa 13,4 m³ auf.

Die Tür 6 umfasst einen Türrahmen 13, der mit dem ersten und dem zweiten Türflügel 7, 8 jeweils durch zwei Scharniere 14 verbunden ist. Der erste und der zweite Türflügel 7, 8 sind relativ zum Türrahmen 13 um die jeweiligen Scharniere 14 drehbar gelagert. Der Öffnungswinkel, um den der erste und der zweite Türflügel 7, 8 um die jeweiligen Scharniere 14 maximal gedreht werden können, beträgt 180°. Die Scharniere 14 sind aus Edelstahl ausgebildet, können aber auch aus Aluminium ausgebildet sein.

Die Tür 6 ist in die Rückwand 11 eingebracht und bedeckt einen Ausschnitt 15 der Rückwand 11. Der Ausschnitt 15 der Wand 11 weist eine lichte Weite von mehr als 800 mm auf. Die Tür 6 erstreckt sich in der Rückwand 11 vom Boden 2 bis zur Decke 3. Der erste und/oder der zweite Türflügel 7, 8 können von der geschlossenen Position in die geöffnete Position durch Öffnen des ersten und/oder des zweiten Türflügels 7, 8 überführt werden. Der erste und/oder der zweite Türflügel 7, 8 können von der geöffneten Position in die geschlossene Position durch Schließen des ersten und/oder des zweiten Türflügels 7, 8 überführt werden. In der geschlossenen Position des ersten oder zweiten Türflügels 7, 8 sind der erste oder zweite Türflügel 7, 8 im Wesentlichen parallel zu der Rückwand 11 ausgerichtet und verdecken den Ausschnitt 15 der Wand 11 vollständig. Sind der erste und der zweite Türflügel 7, 8 in der geöffneten Position, kann ein Benutzer von außen nach innen oder umgekehrt durch den Ausschnitt 15 der Wand 11 in den Kofferaufbau 1 hinein- oder aus dem Kofferaufbau 1 heraustreten. In der geöffneten Position des ersten oder zweiten Türflügels 7, 8, wird der Ausschnitt 15 der Wand 11 nicht vollständig verdeckt.

Insofern weisen der erste und der zweite Türflügel 7, 8 mehrere geöffnete Positionen auf.

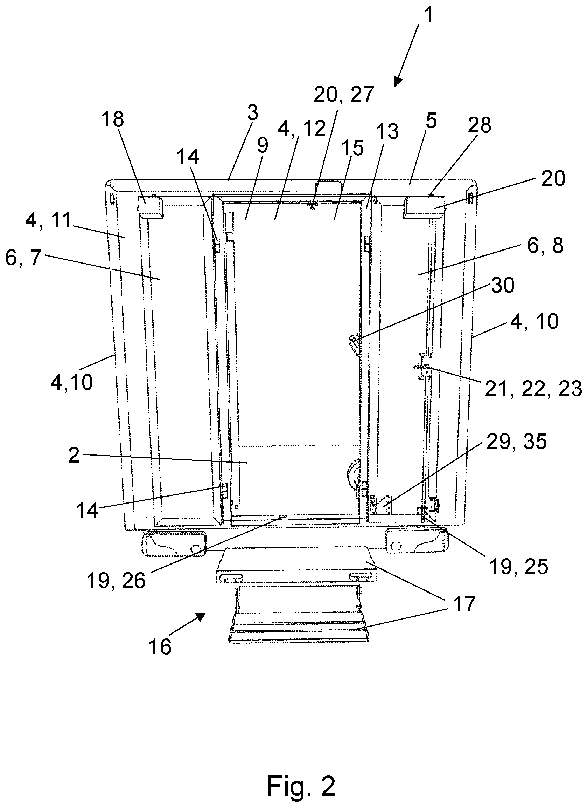

Der Kasten 5 umfasst eine Vorrichtung zum Ein- und Ausstieg 16 aus dem Kasten 5. Die Vorrichtung 16 umfasst zwei Treppenstufen 17. Die Treppenstufen 17 sind derart ausgebildet, dass ein Benutzer sie betreten kann, um in den Kasten 5 hineinzusteigen oder aus dem Kasten 5 herauszusteigen. Die Tragkraft der Treppenstufen 17 liegt bei 200 kg. Zudem sind die Treppenstufen 17 derart ausgebildet, dass ein Treppensteiger 30 Lasten über die Treppenstufen 17 hinauf oder hinunter transportieren kann. Dazu liegt der Abstand zwischen zwei benachbarten Treppenstufen 17 bei 200 mm. Eine der Treppenstufen 17 weist eine Gebrauchsstellung und eine Transportstellung auf. In der Gebrauchsstellung (siehe **Figur 2****)** ist die Treppenstufe 17 so positioniert, dass ein Benutzer sie betreten kann, um in den Kasten 5 hineinzusteigen oder aus dem Kasten 5 herauszusteigen. In der Transportstellung (siehe **Figur 1****)** ist die Treppenstufe 17 platzsparend unterhalb des Kastens 5 positioniert und daher in **Figur 1** nicht sichtbar. Die Treppenstufe 17 kann von einem Benutzer freihändig zwischen Gebrauchsstellung und Transportstellung überführt werden. Zur Überführung der Treppenstufen 17 zwischen Gebrauchsstellung und Transportstellung ist die Treppenstufe 17 ein- und ausziehbar und ein- und ausschwenkbar ausgestaltet, wobei eine Linearbewegung und eine Drehbewegung überlagert sind. Dabei ist die Linearbewegung die Hauptbewegung, um die Treppenstufe 17 ein- bzw. auszuziehen. Die Treppenstufen 17 sind außerhalb des Öffnungsbereich der Tür 6 angeordnet. Dadurch ist sichergestellt, dass die Tür 6 unabhängig von der Stellung der Treppenstufen 17 öffenbar und schließbar ist. Der erste und der zweite Türflügel 7, 8 können ohne vorheriges Überführen der Treppenstufen 17 in die Gebrauchs- oder Transportstellung geöffnet werden. Die Vorrichtung 16 umfasst ein Warnsystem. Das Warnsystem ist dabei derart ausgestaltet, dass ein Benutzer durch einen akustischen und visuellen Warnhinweis darüber informiert wird, dass wenigstens eine der Treppenstufen 17 in einer Gebrauchsstellung positioniert ist. Das Warnsystem erfasst zumindest weitere Eingangsgrößen, insbesondere den Zustand der Tür 6 des Kastens 5 und die Geschwindigkeit des Fahrzeugs. Das Warnsystem ist so ausgestaltet, dass der Warnhinweis nur ausgegeben wird, wenn eine weitere Bedingung vorliegt, insbesondere wenn zusätzlich zu einer Treppenstufe 17 in Transportstellung die Tür 6 des Kastens 5 geschlossen ist oder das Fahrzeug losfährt. Das Warnsystem ist so ausgestaltet, dass es bereits aktiv ist, sobald die Zündung des Fahrzeugs eingeschaltet ist.

**Figur 2** zeigt den erfindungsgemäßen Kofferaufbau 1 aus **Figur 1** in einer weiteren Ansicht. Der erste und der zweite Türflügel 7, 8 sind in **Figur 2** in einer geöffneten Position dargestellt. Der erste Türflügel 7 umfasst einen Fixiermechanismus 18, der den ersten Türflügel 7 in der geschlossenen Position hält. Der erste Türflügel 7 ist durch Aufbringen einer Kraft öffenbar. Der zweite Türflügel 8 weist einen ersten und einen zweiten Verriegelungsmechanismus 19, 20 auf, um den zweiten Türflügel 8 in der geschlossenen Position zu halten. Der erste und der zweite Verriegelungsmechanismus 19, 20 weisen jeweils eine entriegelte und eine verriegelte Stellung, wobei in der entriegelten Stellung der zweite Türflügel 8 zwischen geöffneter und geschlossener Position überführt werden kann. In der verriegelten Stellung ist der zweite Türflügel 8 in der geschlossenen Stellung verriegelt. Der zweite Türflügel 8 umfasst zudem ein Betätigungselement 21, wobei durch Betätigung des Betätigungselements 21 der erste und der zweite Verriegelungsmechanismus 19, 20 zwischen entriegelter und verriegelter Stellung überführt werden können.

Ist der erste Türflügel 7 in einer geschlossenen Position, dann ist zur Öffnung des ersten Türflügels 7 der Fixiermechanismus 18 zu überwinden. Der erste Türflügel 7 ist manuell bedienbar, denn die Kraft zur Überwindung des Fixiermechanismus 18, um den ersten Türflügel 7 von der geschlossenen Position in eine geöffnete Position zu bringen, entspricht einer Handkraft durch einen Benutzer. Der erste Türflügel 7 kann ohne die Betätigung weiterer Elemente geöffnet werden. Zum Öffnen ist demnach ausreichend von außen an dem ersten Türflügel 7 zu ziehen bzw. von innen gegen den ersten Türflügel 7 zu drücken. Zum Schließen ist ausreichend von außen gegen den ersten Türflügel 7 zu drücken bzw. von innen an dem ersten Türflügel 7 zu ziehen, bis sich der erste Türflügel 7 in einer geschlossenen Position befindet. Ist der zweite Türflügel 8 in einer geschlossenen Position und der erste und zweite Verriegelungsmechanismus 19, 20 in verriegelter Stellung, dann sind zur Öffnung des zweiten Türflügels 8 zunächst durch Betätigung des Betätigungselements 21 der erste und der zweite Verriegelungsmechanismus 19, 20 von der verriegelten Stellung in eine entriegelte Stellung zu überführen. Anschließend kann der zweite Türflügel 8 von der geschlossenen Position in eine geöffnete Position überführt werden, um den zweiten Türflügel 8 zu öffnen. Der zweite Türflügel 8 kann vorzugsweise auch in verriegelter Stellung des ersten und des zweiten Verriegelungsmechanismus 19, 20 von einer geöffneten Position in die geschlossene Position gebracht werden.

Das Betätigungselement 21 ist mechanisch ausgestaltet. Das Betätigungselement 21 umfasst zwei Griffe 22, wobei einer der Griffe 22 als Innengriff 23 ausgebildet ist und in einer geschlossenen Stellung des zweiten Türflügels 8 an einer dem Innenraum 12 des Kastens 5 zugewandten Hauptseite des zweiten Türflügels 8 angeordnet ist, und wobei der andere der Griffe 22 als Außengriff 24 ausgebildet ist und in einer geschlossenen Stellung des zweiten Türflügels 8 einer dem Innenraum 12 des Kastens 5 abgewandten Hauptseite des zweiten Türflügels 8 angeordnet ist. Zur Betätigung des Betätigungselements 21 sind die Griffe 22 von einer Ausgangslage in eine Endlage bewegbar. Die Bewegung erfolgt dabei rotatorisch. Die Griffe 22 sind ausgestaltet, dass nach Betätigung des Betätigungselements 21 die Griffe 22 von der Endlage in die Ausgangslage automatisch zurückgeführt werden. Dazu umfasst das Betätigungselement 21 Federelemente. Die Griffe 22 sind als Klinke ausgebildet.

Der Fixiermechanismus 18 ist an einer der Decke 3 des Kastens 5 zugewandten Seite des ersten Türflügels 7 angeordnet, wobei der Fixiermechanismus 18 als Übertotpunktmechanismus ausgebildet ist. Der Fixiermechanismus 18 umfasst eine Feder. Die Feder ist so ausgebildet, dass eine von der Feder verursachte Federkraft der Überführung des ersten Türflügels 7 von der geschlossenen Position in eine der geöffneten Positionen entgegenwirkt. Die Federkraft entspricht im Wesentlichen der Kraft, die zur Überwindung des Fixiermechanismus 18 aufzubringen ist. Der Fixiermechanismus 18 ist als federbelasteter Übertotpunkt-Schnapper ausgebildet.

Der erste Verriegelungsmechanismus 19 umfasst ein Verriegelungselement 25 und eine mit dem Verriegelungselement 25 zusammenwirkende Ausnehmung 26. Das Verriegelungselement 25 ragt in der verriegelten Stellung über den zweiten Türflügel 8 hinaus. Das Verriegelungselement 25 ragt in geschlossener Stellung des zweiten Türflügels 8 (hier nicht dargestellt) und in verriegelter Stellung des ersten Verriegelungsmechanismus 19 in die Ausnehmung 26, wodurch eine formschlüssige Verbindung entsteht. Das Verriegelungselement 25 ist als Riegel ausgebildet, wobei der Riegel eine abgeschrägte Kante aufweist. Der Riegel ist dabei derart ausgestaltet, dass beim Überführen des zweiten Türflügels 8 von einer geöffneten Position in die geschlossene Position die abgeschrägte Kante gegen den Kasten 5 gedrückt wird und der erste Verriegelungsmechanismus 19 von der verriegelten Stellung in die entriegelte Stellung überführt wird. Zudem wirkt auf das Verriegelungselement 25 eine Kraft, die so ausgerichtet ist, um das Verriegelungselement 25 von der entriegelten Stellung in die verriegelte Stellung zu überführen. Die Kraft wird durch ein Federelement hervorgerufen. Beim Schließen des zweiten Türflügels 8 wird das Verriegelungselement 25 somit automatisch beim Erreichen der geschlossenen Position von der entriegelten Stellung in die verriegelte Stellung überführt.

Das Verriegelungselement 25 ist an einer dem Boden 2 des Kastens 5 zugewandten Seite des zweiten Türflügels 8 angeordnet, wobei die Ausnehmung 26 in dem Boden 2 des Kastens 5 angeordnet ist. In geschlossener Stellung des zweiten Türflügels 8 (hier nicht dargestellt) und in verriegelter Stellung des ersten Verriegelungsmechanismus 19 ragt das Verriegelungselement 25 in die Ausnehmung 26, wodurch eine formschlüssige Verbindung zwischen dem zweiten Türflügel 8 und dem Boden 2 des Kastens 5 ausgebildet ist. In geschlossener Stellung des zweiten Türflügels 8 und verriegelter Stellung des ersten Verriegelungsmechanismus 19 kann der zweite Türflügel 8 nicht in eine geöffnete Position überführt werden.

Der zweite Verriegelungsmechanismus 20 umfasst einen Verriegelungsbolzen 27 und einen mit dem Verriegelungsbolzen 27 zusammenwirkenden Schließbolzen 28.

Der Schließbolzen 28 ist als drehbare Klaue ausgebildet. Der Schließbolzen 28 weist eine geschlossene Stellung auf, wobei der Schließbolzen 28 in der geschlossenen Stellung festlegbar ist, wodurch der Verriegelungsbolzen 27 festgehalten wird, um den zweiten Türflügel 8 geschlossen zu halten.

Der Schließbolzen 28 ist an einer der Decke 3 des Kastens 5 zugewandten Seite des zweiten Türflügels 8 angeordnet, wobei der Verriegelungsbolzen 25 an einem der Decke 3 des Kastens 5 zugewandten Bereich der Rückwand 11 angeordnet ist.

Der zweite Verriegelungsmechanismus 20 weist eine Sicherheitsstellung auf (hier nicht dargestellt). In der Sicherheitsstellung des zweiten Verriegelungsmechanismus 20 ist der zweite Türflügel 8 nicht in einer vollständig geschlossenen Position, sondern der zweite Türflügel 8 ist vielmehr leicht geöffnet. Der Öffnungswinkel des zweiten Türflügels 8 im Bezug zur Rückwand 11 des Kastens 5 beträgt in der Sicherheitsstellung weniger als 5°. Der zweite Türflügel 8 wird in der Sicherheitsstellung von dem zweiten Verriegelungsmechanismus 20 in dieser leicht geöffneten Position gehalten und kann nicht in eine beliebige geöffnete Position mit einem größeren Öffnungswinkel wechseln. Obwohl sich der zweite Türflügel 8 in der Sicherheitsstellung in einer leicht geöffneten Position befindet, wird der zweite Türflügel 8 nicht vollständig geöffnet. Die Sicherheitsstellung ist als Sicherheitsmaßnahme vorgesehen: Ist der zweite Türflügel 8 in der vollständig geschlossenen Position und der erste und zweite Verriegelungsmechanismus 19, 20 versagen, kann sich der zweite Türflügel 8 durch äußere Krafteinwirkungen, zum Beispiel während der Fahrt eines Fahrzeuges mit dem Kofferaufbau 1, höchstens bis zur Sicherheitsstellung öffnen. Der Benutzer wird durch die leicht geöffnete Position des zweiten Türflügels 8 auf das Versagen des ersten und zweiten Verriegelungsmechanismus 19, 20 aufmerksam gemacht und kann Maßnahmen ergreifen. Insbesondere wird der zweite Türflügel 8 während der Fahrt nicht in eine vollständig geöffnete Position gebracht, welche die Ladung des Kastens 5 gefährden könnte.

Das Betätigungselement 21 weist einen Sperrzustand und einen Freigabezustand auf. In dem Freigabezustand ist durch Betätigung des Betätigungselements 21 die Stellung des ersten und des zweiten Verriegelungsmechanismus 19, 20 änderbar. In dem Sperrzustand ist durch Betätigung des Betätigungselements 21 die Stellung des ersten und des zweiten Verriegelungsmechanismus 19, 20 unveränderbar. Der Sperrzustand dient dem Diebstahlschutz, damit unbefugte Dritte trotz Betätigung des Betätigungselements 21 den ersten und den zweiten Verriegelungsmechanismus 19, 20 nicht in eine entriegelte Stellung bringen können, um den zweiten Türflügel 8 zu öffnen. Der Innengriff 23 ist so ausgestaltet, dass bei Betätigung des Innengriffs 23 trotz Sperrzustand des Betätigungselements 21 die Stellung des ersten und zweiten Verriegelungsmechanismus 19, 20 von einer verriegelten Stellung in eine entriegelte Stellung überführt werden kann. Dies dient der Notfallöffnung aus dem Innenraum 12 des Kastens5 , so dass auch im Sperrzustand des Betätigungselements 21 eine Öffnung von innen gewährleistet werden kann.

Das Betätigungselement 21 ist durch mechanische und elektronische Mittel zwischen Sperrzustand und Freigabezustand überführbar. Das mechanische Mittel ist als Schließzylinder mit Schlüssel ausgebildet. Das elektronische Mittel ist als Stellmotor ausgebildet, der von einer Fahrzeugzentralverriegelung ansteuerbar ist. Das mechanische Mittel dient dann als Rückfallsystem, falls das elektronische Mittel ausfallen sollte.

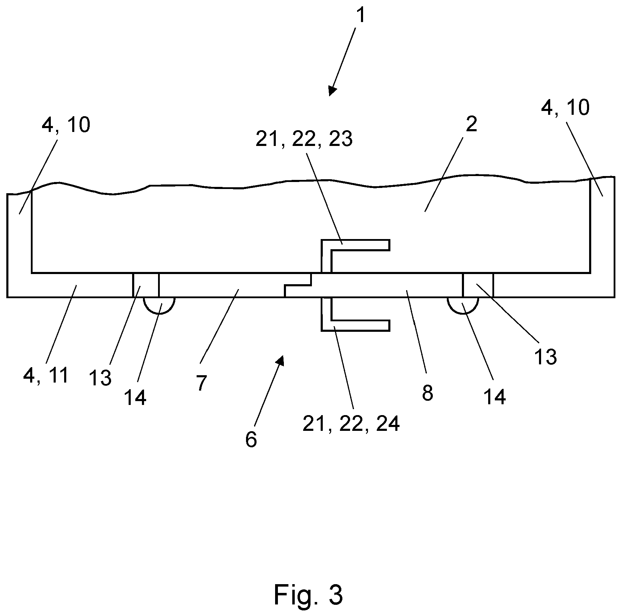

In **Figur 3** ist zur besseren Darstellbarkeit ein Ausschnitt des Kofferaufbaus 1 dargestellt, nämlich Teile der Seitenwände 10 und des Bodens 2 sowie die Rückwand 11 einschließlich Tür 6. Der erste und der zweite Türflügel 7, 8 sind in einer geschlossenen Stellung dargestellt. In geschlossener Stellung von erstem und zweitem Türflügel 7, 8 ist der erste Türflügel 7 zwischen dem zweiten Türflügel 8 und einem Innenraum 12 des Kastens 5 angeordnet. Der zweite Türflügel 8 überlappt dabei den ersten Türflügel 7, so dass eine Kante des zweiten Türflügels 8 über eine Kante des ersten Türflügels 7 übersteht. Dadurch wird der erste Türflügel 7 in der geschlossenen Position zusätzlich von dem zweiten Türflügel 8 in der geschlossenen Position fixiert. Der erste Türflügel 7 kann nur geöffnet werden, wenn sich der zweite Türflügel 8 in einer geöffneten Position befindet. Dadurch wird der erste Türflügel 7 zusätzlich gesichert. Zudem ist die Reihenfolge zum Öffnen und Schließen der Tür 6 festgelegt. Zum Öffnen muss zuerst der zweite Türflügel 8 geöffnet werden, bevor der erste Türflügel 7 geöffnet werden kann. Zum Schließen muss zuerst der erste Türflügel 7 geschlossen werden, bevor der zweite Türflügel 8 geschlossen werden kann.

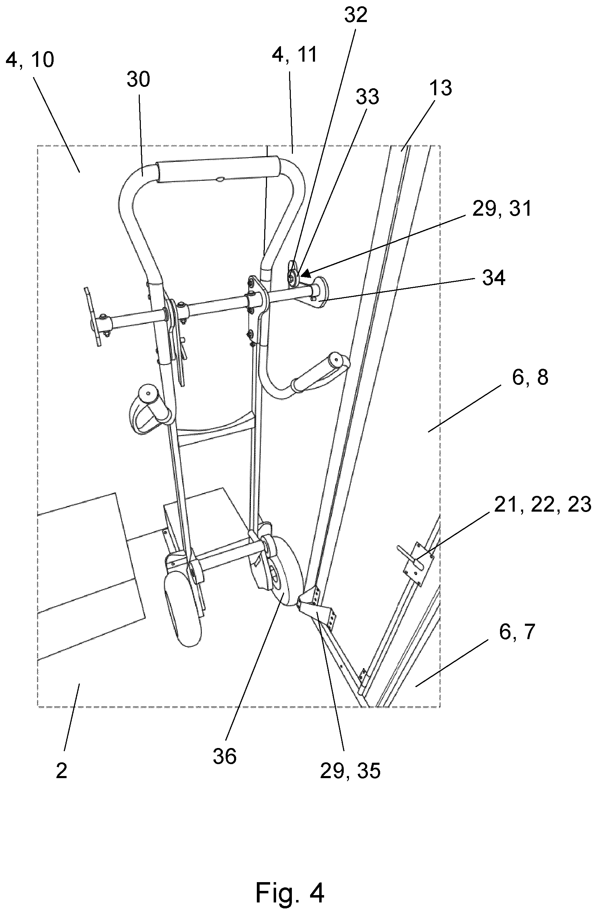

Der Kasten 5 umfasst eine Fixiereinrichtung 29 für einen Treppensteiger 30. Die **Figur 4** zeigt die Fixiereinrichtung 29, die als Transportsicherung ausgebildet ist, so dass der Treppensteiger 30 während der Fahrt des Fahrzeuges mit dem Kofferaufbau 1 gesichert ist.

Die Fixiereinrichtung 29 umfasst zwei Federklammern (hier nicht sichtbar). Ein erstes Sicherungselement des Treppensteigers 30 ist zumindest teilweise von der Federklammer umschließbar. Die Federklammer ist an einer der Seitenwände 10 des Kastens 5 und in einem dem Boden 2 zugewandten Bereich der Wand 4 angeordnet. Die Federklammer ist so ausgestaltet, dass das Sicherungselement des Treppensteigers 30 durch Handkraft in die Federklammer eingesetzt werden kann, so dass die Federklammer das erste Sicherungselement des Treppensteigers 30 zumindest teilweise umgibt. Dadurch entsteht eine form- und/oder kraftschlüssige Verbindung zwischen Fixiereinrichtung 29 und Treppensteiger 30. Das erste Sicherungselement des Treppensteigers 30 ist einem ersten Ende des Treppensteigers 30 zugeordnet.

Die Fixiereinrichtung 29 umfasst einen Sicherungsbolzen 31 mit einem Bolzenkörper 32 und einer Scheibe 33. Der Bolzenkörper 32 ist von einem zweiten Sicherungselement 34 des Treppensteigers 30 zumindest teilweise umschließbar. Der Sicherungsbolzen 31 ist an der Rückwand 11 des Kastens 5 angeordnet. Der Sicherungsbolzen 31 ragt im Wesentlichen senkrecht von der Rückwand 11 ab. Der Bolzenkörper 32 ist zylindrisch ausgestaltet und weist eine Länge von 31 mm auf. Die Scheibe 33 weist einen Durchmesser von 44 mm auf. Die Scheibe 33 ist an der der Wand 4 abgewandten Seite des Bolzenkörpers 32 angeordnet. Der Bolzenkörper 32 wird von dem zweiten Sicherungselement 34 des Treppensteigers 30 umschlossen und Wand 4 und Scheibe 33 legen das zweite Sicherungselement 34 des Treppensteigers 30 in Längsrichtung des Bolzenkörpers 32 fest, so dass Treppensteiger 30 und Fixiereinrichtung 29 form- und/oder kraftschlüssig verbunden sind. Das zweite Sicherungselement 34 des Treppensteigers 30 ist einem zweiten, dem ersten Ende gegenüberliegenden Ende des Treppensteigers 30 zugeordnet.

Die Fixiereinrichtung 29 umfasst einen an dem zweiten Türflügel 8 angeordneten Winkel 35. In geschlossener Position des zweiten Türflügels 8 fixiert der Winkel 35 den Treppensteiger 30 an einem dritten Sicherungselement 36. Der Winkel 35 umfasst einen Befestigungsschenkel und einen Fixierungsschenkel. Dabei ist der Winkel 35 mit dem Befestigungsschenkel an dem zweiten Türflügel 8 befestigt. In geschlossener Position des zweiten Türflügels 8 fixiert der Winkel 35 mit dem Fixierungsschenkel den Treppensteiger 30 an einem dritten Sicherungselement 36. Der Treppensteiger 30 ist zwischen einer Seitenwand 10 des Kastens 5 und dem Fixierungsschenkel form- und kraftschlüssig angeordnet.

## Patentansprüche

1. Kofferaufbau (1) für ein Fahrzeug, umfassend einen durch einen Boden (2), eine Decke (3) und vier Wände (4) gebildeten Kasten (5), wobei in den Kasten (5) eine Tür (6) eingebracht ist, wobei die Tür (6) einen ersten und einen zweiten Türflügel (7, 8) aufweist, die jeweils eine geschlossene und eine geöffnete Position aufweisen, wobei der erste Türflügel (7) einen Fixiermechanismus (18) umfasst, der den ersten Türflügel (7) in der geschlossenen Position hält, wobei der erste Türflügel (7) durch Aufbringen einer Kraft öffenbar ist, wobei der zweite Türflügel (8) einen ersten und einen zweiten Verriegelungsmechanismus (19, 20) aufweist, um den zweiten Türflügel (8) in der geschlossenen Position zu halten, wobei der erste und der zweite Verriegelungsmechanismus (19, 20) jeweils eine entriegelte und eine verriegelte Stellung aufweisen, wobei in der entriegelten Stellung der zweite Türflügel (8) zwischen geöffneter und geschlossener Position überführt werden kann, wobei in der verriegelten Stellung der zweite Türflügel (8) in der geschlossenen Stellung verriegelt ist, wobei der zweite Türflügel (8) zudem ein Betätigungselement (21) umfasst, wobei durch Betätigung des Betätigungselements (21) der erste und der zweite Verriegelungsmechanismus (19, 20) zwischen entriegelter und verriegelter Stellung überführt werden können.

2. Kofferaufbau (1) nach Anspruch 1, **dadurch gekennzeichnet, dass** der Fixiermechanismus (18) an einer der Decke (3) des Kastens (5) zugewandten Seite des ersten Türflügels (7) und/oder an einer dem Boden (2) des Kastens zugewandten Seite des ersten Türflügels (7) angeordnet ist, wobei der Fixiermechanismus (18) als Übertotpunktmechanismus ausgebildet ist.

3. Kofferaufbau (1) nach Anspruch 1 oder 2, **dadurch gekennzeichnet, dass** der erste Verriegelungsmechanismus (19) ein Verriegelungselement (25) und eine mit dem Verriegelungselement (25) zusammenwirkende Ausnehmung (26) umfasst.

4. Kofferaufbau (1) nach einem der Ansprüche 1 bis 3, **dadurch gekennzeichnet, dass** das Verriegelungselement (25) an einer dem Boden (2) des Kastens (5) zugewandten Seite des zweiten Türflügels (8) angeordnet ist, wobei die Ausnehmung (26) in dem Boden (2) des Kastens (5) angeordnet ist.

5. Kofferaufbau (1) nach einem der Ansprüche 1 bis 4, **dadurch gekennzeichnet, dass** der zweite Verriegelungsmechanismus (20) einen Verriegelungsbolzen (27) und einen mit dem Verriegelungsbolzen (27) zusammenwirkenden Schließbolzen (28) umfasst, wobei der erste und der zweite Verriegelungsmechanismus (19, 20) jeweils eine entriegelte und eine verriegelte Stellung aufweisen.

6. Kofferaufbau (1) nach einem der Ansprüche 1 bis 5, **dadurch gekennzeichnet, dass** der Schließbolzen (28) an einer der Decke (3) des Kastens (5) zugewandten Seite des zweiten Türflügels (8) angeordnet ist, wobei der Verriegelungsbolzen (27) an der Decke (3) des Kastens (5) oder einem der Decke (3) des Kastens (5) zugewandten Bereich einer der Wände (4) angeordnet ist.

7. Kofferaufbau (1) nach einem der Ansprüche 1 bis 6, **dadurch gekennzeichnet, dass** der zweite Verriegelungsmechanismus (20) eine Sicherheitsstellung aufweist.

8. Kofferaufbau (1) nach einem der Ansprüche 1 bis 7, **dadurch gekennzeichnet, dass** das Betätigungselement (21) einen Sperrzustand und einen Freigabezustand aufweist, wobei in dem Freigabezustand durch Betätigung des Betätigungselements (21) die Stellung des ersten und des zweiten Verriegelungsmechanismus (19, 20) änderbar ist, wobei in dem Sperrzustand durch Betätigung des Betätigungselements (21) die Stellung des ersten und des zweiten Verriegelungsmechanismus (19, 20) unveränderbar ist.

9. Kofferaufbau (1) nach Anspruch 8, **dadurch gekennzeichnet, dass** das Betätigungselement (21) durch mechanische und/oder elektronische Mittel zwischen Sperrzustand und Freigabezustand überführt werden kann.

10. Kofferaufbau (1) nach einem der Ansprüche 1 bis 9, **dadurch gekennzeichnet, dass** in geschlossener Stellung von erstem und zweitem Türflügel (7, 8) der erste Türflügel (7) zwischen dem zweiten Türflügel (8) und einem Innenraum (12) des Kastens (5) angeordnet ist.

11. Kofferaufbau (1) nach einem der Ansprüche 1 bis 10, **dadurch gekennzeichnet, dass** der Kasten (5) eine Fixiereinrichtung (29) für einen Treppensteiger (30) umfasst.

12. Kofferaufbau (1) nach Anspruch 11, **dadurch gekennzeichnet, dass** die Fixiereinrichtung (29) zumindest eine Federklammer umfasst, wobei ein erstes Sicherungselement des Treppensteigers (30) zumindest teilweise von der Federklammer umschließbar ist.

13. Kofferaufbau (1) nach Anspruch 11 oder 12, **dadurch gekennzeichnet, dass** die Fixiereinrichtung (29) einen Sicherungsbolzen (31) mit einem Bolzenkörper (32) und einer Scheibe (33) umfasst, wobei der Bolzenkörper (32) von einem zweiten Sicherungselement (31) des Treppensteigers (29) zumindest teilweise umschließbar ist.

14. Kofferaufbau (1) nach einem der Ansprüche 11 bis 13, **dadurch gekennzeichnet, dass** die Fixiereinrichtung (29) einen an dem ersten oder dem zweiten Türflügel (8, 8) angeordneten Winkel (35) umfasst, wobei der Winkel (35) in geschlossener Position des ersten oder zweiten Türflügels (7, 8) den Treppensteiger (30) an einem dritten Sicherungselement (36) fixiert.

15. Fahrzeug zur Auslieferung von Lebensmitteln mit einem Kofferaufbau (1) nach einem der Ansprüche 1 bis 14.
